# EUROPEAN PATENT APPLICATION

(11) **EP 2 665 330 A1**
(43) Date of publication of application: **20.11.2013**
(21) Application number: 12360040.5
(22) Date of filing: 14.05.2012
(51) Int. Cl.: H04W 76/04

(54) **User equipment discontinuous reception configuration according to intermittent data arrival**

(71) Applicant: Alcatel Lucent, 75007 Paris (FR)
(72) Inventor: Worrall, Chandrika K., Newbury, Berkshire RG14 6SN (GB); Palat, Sudeep K., Swindon, Wiltshire SN5 6EE (GB)
(74) Representative: Script IP Limited

(57) **Abstract**

A method of controlling a discontinuous reception state of user equipment, user equipment, a network node and a computer program product are disclosed. The method of comprises the steps of: transitioning from other than a longer discontinuous reception state to the longer discontinuous reception state on receipt of an override instruction from the network. This enables the user equipment to transition immediately to the longer discontinuous reception state without having to go through the full cycles of any intervening states such as a short discontinuous reception state. This helps to reduce power consumption within the user equipment by avoiding unnecessary reception cycles. This approach is particularly effective for short and infrequent transmissions to the user equipment such as may occur during the transmission of configuration or control messages, or as result of the user equipment running diverse data applications.

## Description

### FIELD OF THE INVENTION

The present invention relates to a method of controlling a discontinuous reception state of user equipment, user equipment, a network node and a computer program product.

### BACKGROUND

Wireless telecommunications networks are known. In a cellular system, radio coverage is provided by area. Those areas of radio coverage are known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In order to reduce power consumption in user equipment, it is known to cause the user equipment to transition between a continuous reception state to discontinuous reception states. During the discontinuous reception states, the reception logic is only powered during reception periods, which provides for power savings.

Although using discontinuous reception reduces power consumption, power consumption can still be higher than necessary.

Accordingly, it is desired to further reduce power consumption.

### SUMMARY

According to a first aspect, there is provided a method of controlling a discontinuous reception state of user equipment of a wireless telecommunication network, the method comprising the steps of: transitioning from other than a longer discontinuous reception state to the longer discontinuous reception state on receipt of an override instruction from the network.

The first aspect recognises that a problem with existing discontinuous receive approaches is that unnecessary power can still be wasted in the user equipment. In particular, existing discontinuous reception (DRX) procedures permit configuration of up to two discontinuous reception cycles (short and long discontinuous reception cycle) per user equipment. The discontinuous reception procedure is designed to reduce user equipment battery consumption. The discontinuous reception configuration includes the configuration of discontinuous reception cycles (long and/or short discontinuous reception cycle), a short DRX cycle timer, a DRX-retransmission timer, an on duration and a DRX inactivity timer.

The user equipment's activity is represented by parameter "active time". "Active time" is a function of all the discontinuous reception configured parameters. The user equipment continuously monitors the downlink control channel (physical downlink control channel - PDCCH) while in "active time". Unlike the discontinuous reception configuration parameters where the value is configured by radio resource connection (RRC) signalling and the configured value remains constant for the configuration, "active time" is dynamic and the time when the user equipment monitors for PDCCH is extended with user equipment activity.

Discontinuous reception parameters are configured by the network via RRC signalling. If two discontinuous reception cycles are configured, the user equipment starts in continuous reception mode. After the expiry of the on duration timer, the DRX retransmission timer and the DRX-inactivity timer, the user equipment then transits to the short discontinuous reception cycle, where the user equipment monitors PDCCH only during the on duration. After the expiry of the short DRX cycle timer, the user equipment starts the long DRX cycle. The transitions from short discontinuous reception to long discontinuous reception provides progressive user equipment power saving while allowing for fast delivery of data traffic. If data arrives at the network for a corresponding user equipment that is in discontinuous reception, the network waits until the user equipment starts monitoring PDCCH to deliver the traffic to the user equipment. The above transition procedure suits HTTP-like traffic models, where data arrival is intermittent and where, when the data arrival is started, there is frequent arrival of packets.

In addition to the above, timer-based mode transitions, the network can also send the user equipment into sleep mode using a medium access command (MAC) command (DRX MAC control element). If the user equipment receives a DRX MAC CE, the user equipment immediately starts the short discontinuous reception cycle. However, there is no mechanism to bring the user equipment immediately into long discontinuous reception.

Even though the current discontinuous reception procedure sufficiently satisfies the application with HTTP-like traffic characteristics, future diverse data application requirements can not be met with the current discontinuous reception procedure. For example, the diverse data application generates "keep alive" traffic or "status update" traffic which is running at the background and is transparent to the user. This background traffics generally contains very small data packets and data arrival is infrequent. According to the current discontinuous reception procedure, even a small background data packet brings the UE into continuous reception then to short discontinuous reception and then to long discontinuous reception. Unlike in the HTTP traffic model, the background data is not followed by frequent data packets. Therefore, to achieve the optimal power saving, the user equipment should be sent to long discontinuous reception as soon as possible. However, the current discontinuous reception procedure lacks the ability to bring the user equipment back to long discontinuous reception as soon as possible by the network.

One possible solution to the problem is to reconfigure the discontinuous reception cycles by the network. If the network sees the need to bring the user equipment back into long discontinuous reception, the network can re-configure the discontinuous reception to only contain the long discontinuous reception cycle. If only the long discontinuous reception cycle is configured, the user equipment could be sent to sleep mode (long discontinuous reception) by the network via the existing DRX MAC CE. However, the re-configuration of the discontinuous reception cycle requires RRC signalling and will increase the duration that the user equipment needs to be communicating with the network thereby increasing battery consumption. Further, the network will need to reconfigure the short DRX again as required if there is data that could benefit from short DRX. Also, the network configures the discontinuous reception cycle not only considering the expected traffic characteristic but also quality of service (QoS) requirements of the bearers, user equipment subscription profile, radio resource management (RRM) measurements requirements, etc. Therefore re-configuration of the discontinuous reception configuration purely based on user equipment power saving and characteristics of background application may not be appropriate.

Accordingly, a method of controlling a discontinuous reception state of user equipment is provided. The method may comprise the step of transitioning from a state which is other than a longer discontinuous reception state to the longer discontinuous reception state when an override instructions from the network is received. This enables the user equipment to transition immediately to the longer discontinuous reception state without having to go through the full cycles of any intervening states such as a short discontinuous reception state. This helps to reduce power consumption within the user equipment by avoiding unnecessary reception cycles. This approach is particularly effective for short and infrequent transmissions to the user equipment such as may occur during the transmission of configuration or control messages, or as result of the user equipment running diverse data applications.

In one embodiment, the step of transitioning comprises ceasing to operate in the other than a longer discontinuous reception state instead operating in the longer discontinuous reception state on receipt of the override instruction.

In one embodiment, the step of transitioning comprises transitioning from one of a continuous reception state and a short discontinuous reception state to the longer discontinuous reception state. Accordingly, the transition may occur between the continuous state or a short discontinuous reception state and one longer discontinuous reception state.

In one embodiment, the short discontinuous reception state is a state in which the user equipment monitors periodically for transmissions from the network and the longer discontinuous reception state is a state in which the user equipment monitors less periodically for transmissions from the network.

In one embodiment, a time period between monitoring in the short discontinuous reception state is a short discontinuous reception time interval and in the longer discontinuous reception state is a longer discontinuous reception time interval, the longer discontinuous reception time interval being larger than the short discontinuous reception time interval.

In one embodiment, the user equipment is configurable into a plurality of different longer discontinuous reception states and the override instruction provides an indication of which of the plurality of different longer discontinuous reception states to transition to. Accordingly, a number of different longer discontinuous reception states may be supported by the user equipment and the override instructions details which of those longer discontinuous reception states should be used.

In one embodiment, the method comprises the step transitioning to the one of the continuous reception state and the short discontinuous reception state on receipt of data from the network.

In one embodiment, the method comprises the step of remaining in the one of the continuous reception state and the short discontinuous reception state on receipt of data from the network.

In one embodiment, the instruction is a medium access control control element command. Hence, an existing command may be reused.

In one embodiment, the instruction is encoded with one of a unique logical channel identifier and reserve bits within the medium access control control element command.

In one embodiment, the method comprises the step of signalling to the network that the user equipment is ready to transition to the longer discontinuous reception state.

According to a second aspect, there is provided user equipment of a wireless telecommunication network, the user equipment comprising: transitioning logic operable to transition from other than a longer discontinuous reception state to the longer discontinuous reception state on receipt of an override instruction from the network.

In one embodiment, the transitioning logic is operable to cease operating in the other than a longer discontinuous reception state instead operating in the longer discontinuous reception state on receipt of the override instruction.

In one embodiment, the transitioning logic is operable to transition from one of a continuous reception state and a short discontinuous reception state to the longer discontinuous reception state.

In one embodiment, the short discontinuous reception state is a state in which the user equipment monitors periodically for transmissions from the network and the longer discontinuous reception state is a state in which the user equipment monitors less periodically for transmissions from the network.

In one embodiment, a time period between monitoring in the short discontinuous reception state is a short discontinuous reception time interval and in the longer discontinuous reception state is a longer discontinuous reception time interval, the longer discontinuous reception time interval being larger than the short discontinuous reception time interval.

In one embodiment, the user equipment is configurable into a plurality of different longer discontinuous reception states and the override instruction provides an indication of which of the plurality of different longer discontinuous reception states to transition to.

In one embodiment, the transitioning logic is operable to transition to the one of the continuous reception state and the short discontinuous reception state on receipt of data from the network.

In one embodiment, the transitioning logic is operable to the one of one of the continuous reception state and the short discontinuous reception state on receipt of data from the network.

In one embodiment, the instruction is a medium access control control element command.

In one embodiment, the instruction is encoded with one of a unique logical channel identifier and reserve bits within the medium access control control element command.

In one embodiment, the user equipment comprises signalling logic operable to signal to the network that the user equipment is ready to transition to the longer discontinuous reception state.

According to a third aspect, there is provided a method of controlling a discontinuous reception state of user equipment of a wireless telecommunication network, the method comprising the steps of: determining that the user equipment is to transition from other than a longer discontinuous reception state to the longer discontinuous reception state and transmitting an override instruction to the user equipment to instruct the user equipment to transition to the longer discontinuous reception state.

In one embodiment, the step of determining comprises determining that the other than the longer discontinuous reception state is not required to support communication with user equipment and transmitting the override instruction to the user equipment to instruct the user equipment to transition to the longer discontinuous reception state.

In one embodiment, the communication is one of command and traffic information.

In one embodiment, the step of determining comprises receiving a request from the user equipment to transition to the longer discontinuous reception state.

According to a fourth aspect, there is provided a network node operable to control a discontinuous reception state of user equipment of a wireless telecommunication network, the network node comprising: determining logic operable to determine that the user equipment is to transition from other than a longer discontinuous reception state to the longer discontinuous reception state; and transmission logic operable to transmit an override instruction to the user equipment to instruct the user equipment to transition to the longer discontinuous reception state.

In one embodiment, the determining logic is operable to determine that the other than the longer discontinuous reception state is not required to support communication with user equipment and the transmission logic is operable to transmit the override instruction to the user equipment to instruct the user equipment to transition to the longer discontinuous reception state.

In one embodiment, the communication is one of command and traffic information.

In one embodiment, the determining logic is operable to receive a request from the user equipment to transition to the longer discontinuous reception state.

According to a fifth aspect, there is provided a computer program product operable, when executed on a computer, to perform the method of the first or the third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a conventional discontinuous receive procedure; and
Figure 2 illustrates a discontinuous receive procedure according to one embodiment.

### DESCRIPTION OF THE EMBODIMENTS

### Overview

Before discussing the embodiments in any more detail, first an overview will be provided. As mentioned above, the current discontinuous receive procedure transitions between three main states. The first main state is the continuous reception state, where the user equipment continuously monitors for transmissions from the network, typically by base stations.

Upon satisfying a number of criteria intended to characterise when user equipment is unlikely to receive further regular transmissions, the user equipment transitions to a short discontinuous reception state where the user equipment periodically monitors for transmissions. This helps to reduce the power consumption of the user equipment since there are periods when the reception logic is inactive. Again, upon satisfying a number of conditions, the user equipment then transitions to one or more long discontinuous reception states where the period between which the user equipment monitors for transmissions is extended. This helps to save power further, by extending the periods within which the reception logic is inactive.

This gradual change between states helps to conserve power while still enabling transmissions to be received by the user equipment.

However, as mentioned above, some traffic characteristics are not well-suited to this approach. In particular, many diverse data applications provide very short bursts or even just a single packets of data to the user equipment. The occurrence of this data would normally be sufficient to cause the user equipment to transition back to the continuous or short discontinuous reception state, which unnecessarily wastes power by activating continuous reception or a number of short reception cycles (both of which are unlikely to receive any data) before transitioning back to a longer discontinuous reception state.

Accordingly, embodiments temporarily enable the network to override the continuous or short discontinuous reception state, thereby avoiding performing additional short discontinuous reception cycles.

Typically, a modified MAC signal is utilized to signal a short discontinuous receive override command. On receipt of the override command, the user equipment then starts the long discontinuous receive cycle at that time.

If the user equipment moves back to continuous reception (due to data arrival or uplink transmissions), then typically, in the absence of the overriding command, the user equipment will then follow the conventional state transition procedure from continuous to short discontinuous receive to long discontinuous receive. However, it will be appreciated that it is also possible to provide an override command to the user equipment permanently overriding the short discontinuous receive state until a further command cancelling the override command is received.

### Conventional Discontinuous Receive

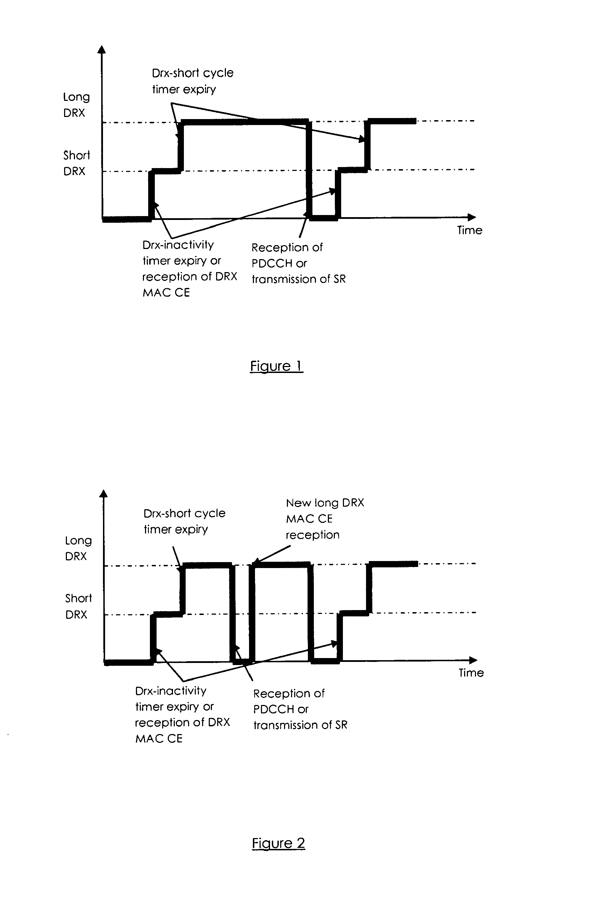

Figure 1 shows a conventional approach to controlling the reception state of user equipment. The discontinuous receive procedure is defined for RRC_connected user equipment to enable user equipment power consumption to be reduced. The discontinuous receive behaviour is defined by the network. This behaviour is primarily controlled by a number of configurable parameters and a set of rules. The parameters of "on-duration", "inactivity-time" and "DRX cycle" are defined in 3GPP TS 36.321.

Currently, two discontinuous receive cycles are configured for user equipment. This configuration occurs using RRC signalling. When two discontinuous receive cycles are configured and discontinuous receive is activated, the user equipment activity can be described as being in one of three states: continuous reception, short discontinuous receive or long discontinuous receive. Each discontinuous receive cycle has a period where the user equipment monitors the downlink resource assignments (PDCCH) transmissions for the "on-duration". During this "on-duration" period of a discontinuous receive cycle period, the user equipment continuously receives (i.e. the user equipment is able to receive traffic at any point of the "on-duration").

If the user equipment receives downlink traffic during the "on-duration", the user equipment discontinuous state is extended by a time defined by an "inactivity-timer". Following the "on-duration" period, if there is no PDCCH scheduling during the "inactivity-time" period, the user equipment then moves to the short discontinuous receive state where the user equipment monitors the downlink during the next "on-duration" period.

The network can also order the user equipment to move immediately to short discontinuous receive when configuring discontinuous reception by transmitting to the user equipment a discontinuous reception command in a MAC control element (CE). If the user equipment receives this MAC CE, then the user equipment moves to short discontinuous receive. Transition from this short discontinuous receive state to a long discontinuous receive state is controlled by a "short discontinuous receive cycle timer" which defines a number of short discontinuous receive cycles that must occur with no traffic being received. The user equipment remains in the short discontinuous receive state for the duration defined by the short discontinuous receive cycle timer before moving to the long discontinuous receive state. If the user equipment receives downlink traffic while in the short or long discontinuous receive state, then the user equipment moves to the continuous reception state and repeats this procedure.

Figure 1 schematically illustrates a conventional discontinuous receive operation. The conventional discontinuous receive procedure is specified in 3GPP TS 36.321 as follows:
- if a DRX Command MAC control element is received:
   - stop *onDurationTimer*;
   - stop *drx-InactivityTimer.*
- if *drx-InactivityTimer* expires or a DRX Command MAC control element is received in this subframe:
   - if the Short DRX cycle is configured:
      - start or restart *drxShortCycleTimer*;
      - use the Short DRX Cycle.
   - else:
      - use the Long DRX cycle.
- if *drxShortCycleTimer* expires in this subframe:
   - use the Long DRX cycle.

However, using the current procedure there is no possible way of commanding the user equipment to directly move to long discontinuous receive by the network when both short and long discontinuous receive are configured. It may be desirable to move the user equipment into long discontinuous receive and bypass the short discontinuous receive if either the user equipment or network has knowledge that there is no further the data for the user equipment.

One way to cause the user equipment to move to the long discontinuous receive state is for the network to reconfigure the discontinuous receive cycle to have only the long discontinuous receive cycle. However this involves RRC signalling and will increase the duration that the user equipment needs to be communicating with the network, thereby increasing battery consumption. Further, the network will need to reconfigure the short discontinuous receive again as required if there is data that could benefit from short discontinuous receive.

### Override Command

Accordingly, embodiments provide an approach which temporarily overrides the continuous or short discontinuous receive cycles using an override command. Figure 2 illustrates the discontinuous receive procedure according to one embodiment.

The new override command message is termed the "long DRX MAC control element". Upon receipt of the long DRX MAC CE, the user equipment stops the "DRXshortcycletimer", "DRX-OndurationTimer" and the "DRX-InactivityTimer" and the user equipment immediately starts using the long discontinuous receive cycle.

Accordingly, the procedure according to embodiments can be described as follows:
- if a DRX Command MAC control element or long DRX MAC control element is received:
   - stop *onDurationTimer*;
   - stop *drx-InactivityTimer.*
- if *drx-InactivityTimer* expires or a DRX Command MAC control element is received in this subframe:
   - if the Short DRX cycle is configured:
      - start or restart *drxShortCycleTimer*;
      - use the Short DRX Cycle.
   - else:
      - use the Long DRX cycle.
   - if *drxShotfCycleTimer* expires or long DRX MAC Control element is received in this subframe:
- use the Long DRX cycle.

The long DRX MAC CE may be encoded within an existing DRX command MAC CE which has a fixed size of zero bits payload and the command is identified by a special logical channel identifier (LCID) used in the MAC subheader.

Figure 3 shows a DRX command MAC CE. The fields designated "R" are reserved and the fields designated "E" indicate if more fields are present in a MAC header or not. A unique LCID can be taken from a reserve set of LC IDs (01011-11010). Otherwise, a reserved field in the DRX command MAC CE can be used to indicate the long DRX MAC CE. It will be appreciated that this encoding could be extended to differentiate between different DRX MAC CEs such as those mentioned above which differentiate between different discontinuous receive states or levels of discontinuous receive cycles.

As mentioned above, the decision by the network to move the user equipment into a long discontinuous receive state may be based on the traffic conditions, the user equipment subscription, measurement requirements, etc. For example, consider user equipment that is configured for short and long discontinuous receive cycles. If the user equipment signals that it is not expecting any traffic for a certain period of time, then the network may move the user equipment directly into the long discontinuous receive state to save power.

Similarly, the network (for example, a base station) may have received an indication from an application server, call network entity or policy controller entity indicating the end of transmissions for the user equipment. Based on this received information, the network may move the user equipment to the long discontinuous receive state to save power.

Likewise, the network (for example, a base station) may itself infer the end of transmissions to the user equipment. Based on this, the network may move the user equipment to long discontinuous receive to save power.

Also, the user equipment may start continuous reception due to the reception of configuration or control signalling from the network. In the circumstances, no user data transmission may be involved. Therefore, the network may move the user equipment to the long discontinuous receive state upon completion of the control signalling procedure.

This approach provides modified signalling for the temporary overriding of the short discontinuous receive cycle when short and long discontinuous receive cycles are configured for user equipment. This allows the network to move the user equipment to long discontinuous receive as soon as possible, which results in improved user equipment power saving. This also avoids the need for the configuration or reconfiguration of discontinuous receive cycles using RRC signalling. Therefore, a reduced signalling overhead is achieved at the same time as providing an improved user equipment power savings.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling a discontinuous reception state of user equipment of a wireless telecommunication network, said method comprising the steps of:
transitioning from other than a longer discontinuous reception state to said longer discontinuous reception state on receipt of an override instruction from said network.

2. The method of claim 1, wherein said step of transitioning comprises ceasing to operate in said other than a longer discontinuous reception state instead operating in said longer discontinuous reception state on receipt of said override instruction.

3. The method of claim 1 or 2, wherein said other than a longer discontinuous reception state comprises a short discontinuous reception state which is a state in which said user equipment monitors periodically for transmissions from said network and said longer discontinuous reception state is a state in which said user equipment monitors less periodically for transmissions from said network.

4. The method of any preceding claim, wherein said user equipment is configurable into a plurality of different longer discontinuous reception states and said override instruction provides an indication of which of said plurality of different longer discontinuous reception states to transition to.

5. The method of any preceding claim, comprising the step of transitioning to said other than a longer discontinuous reception state on receipt of data from said network.

6. The method of any preceding claim, comprising the step of remaining in said other than a longer discontinuous reception state on receipt of data from said network.

7. The method of any preceding claim, wherein said instruction is a medium access control control element command.

8. The method of any preceding claim, comprising the step of signalling to said network that said user equipment is ready to transition to said longer discontinuous reception state.

9. User equipment of a wireless telecommunication network, said user equipment comprising:
transitioning logic operable to transition from other than a longer discontinuous reception state to said longer discontinuous reception state on receipt of an override instruction from said network.

10. A method of controlling a discontinuous reception state of user equipment of a wireless telecommunication network, said method comprising the steps of:
determining that said user equipment is to transition from other than a longer discontinuous reception state to said longer discontinuous reception state and transmitting an override instruction to said user equipment to instruct said user equipment to transition to said longer discontinuous reception state.

11. The method of claim 10, wherein said step of determining comprises determining that said other than said longer discontinuous reception state is not required to support communication with user equipment and transmitting said override instruction to said user equipment to instruct said user equipment to transition to said longer discontinuous reception state.

12. The method of claim 10 or 11, wherein said communication is one of command and traffic information.

13. The method of any one of claims 10 to 12, wherein said step of determining comprises receiving a request from said user equipment to transition to said longer discontinuous reception state.

14. A network node operable to control a discontinuous reception state of user equipment of a wireless telecommunication network, said network node comprising:
determining logic operable to determine that said user equipment is to transition from other than a longer discontinuous reception state to said longer discontinuous reception state; and
transmission logic operable to transmit an override instruction to said user equipment to instruct said user equipment to transition to said longer discontinuous reception state.

15. A computer program product operable, when executed on a computer, to perform the method steps of any one of claims 1 to 8 or 10 to 13.
